# EUROPEAN PATENT APPLICATION

(11) **EP 0 799 872 A1**
(43) Date of publication of application: **08.10.1997**
(21) Application number: 97104944.0
(22) Date of filing: 24.03.1997
(51) Int. Cl.: C09D 123/08, C09D 123/30, C09D 5/08

(54) **Pigmented coatings for use in providing both corrosion protection and pigmentation to metal surfaces**

(30) Priority: 01.04.1996 US 625151
(71) Applicant: BASF CORPORATION, Mount Olive, New Jersey 07828-1234 (US)
(72) Inventor: Reynols, Michael A., Grosse Ile, Michigan 48138 (US); Gessner, Thomas B., Ypsillanti, Michigan 48197 (US); Anchor, Michael J., Northville, Michigan 48167 (US); Novack, Lawrence P., Glenwood, New Jersey 07418 (US)
(74) Representative: Schulte, Konrad Bernhard, Dr.

(57) **Abstract**

The present invention relates to pigmented coatings for metal surfaces comprised of oxidized wax emulsions, alkaline ethylene acrylic acid copolymer dispersions and pigment which provide superior coating coverage while maintaining the corrosion protection qualities of the coating.

## Description

The present invention relates to pigmented coatings for metal surfaces comprised of oxidized wax emulsions, alkaline ethylene acrylic acid copolymer dispersions and pigment which provide superior coating coverage and toughness while maintaining the corrosion protection qualities of the coating.

With increased emphasis on quality in the automotive and other heavy industries, the requirements for corrosion inhibition have become more stringent. Metal corrosion is a serious problem and industry has approached this problem in several ways: metal plating the part, lacquering the part and electrophoretically coating the part. However, due to this increased interest in quality, the prior art solutions to the problem are less than optimum. Specifically, lacquer based coatings are high volatile organic carbon (VOC) solvent based, electrophoretic coatings are costly and the coatings tend to be unacceptably thick. Current coating compositions also tend to chip off the coated part during handling, especially automated handling. For example, the coating tends to chip off of screws when they are inserted using an automatic screwdriver. Thus, the industry is seeking coatings that are more durable, safe, and cost effective as well as aesthetically acceptable. To this end, the industry has experimented with aqueous dispersions of ethylene acrylic acid copolymers prepared using volatile alkali which provide temporary corrosion protection to metal surfaces.

The art teaches clear aqueous coatings based on polyethylene copolymer waxes. For example, in JP-4-153-239 (JP 239), Applicants disclose aqueous resin compositions having (a) an aqueous copolymer dispersion formed from 99-60 wt% of ethylene and 1 - 40% of an ethylene type unsaturated carboxylic acid, and (b) an aqueous dispersion of wax such as vegetable waxes, mineral waxes and synthetic waxes such as polyethylene waxes and their derivatives, and ethylene copolymers. JP 239 states that the composition is useful as a protective agent, mold release agent, and water repellent for paper, metal, and plastic. US 4,693,909 (US 909) discloses a liquid preservative for metal surfaces comprising an ethylene acrylic acid copolymer alone or in combination with waxes based on polyethylene oxidation products. The ethylene acrylic acid copolymer in US 909 comprises from 8 to 25% by weight of acrylic acid units and from 92 to 75% by weight of ethylene units.

Pigmented coatings that provide a combination of corrosion inhibition and color would be an advance in the art. To this end, the art has experimented with a coating formed by the simple addition of a carbon black pigment dispersion to the aqueous alkaline dispersion of ethylene acrylic acid copolymers. However, this coating provides limited benefits. The disadvantage of this simple coating is that a very thick film is required to achieve the desired coverage and hiding power. Thick films increase the use cost of the coating and are considered cosmetically unattractive by the metal finishing industry. In addition, the thick films are soft enough that when they come in contact during manufacturing, the coating surface is marred. Nor do thin coats of these simple pigmented dispersions cover the metal surface well. The thin coating, while wet, tends to pull back from the edges and bead up. Addition of surfactants with known wetting power does not improve the coverage and hiding power of the pigmented coating.

Applicants have surprisingly discovered that the addition of an emulsion of an oxidized polyethylene wax to a blend of an alkaline dispersion of ethylene acrylic acid copolymer and pigment provides a coating with excellent coverage, hiding power, corrosion protection, and toughness. Especially surprising is the toughness of the films formed from the present invention. Applicants' coating is superior in chip resistance to the current electrophoretic and lacquer based coatings. Thin coats of this wax modified dispersion cover the surface well. While wet, the coating does not tend to pull back from the edges or bead up. The thin coat is also tougher than the thick coat. Multiple coats of the modified dispersion can be used to control the intensity of the color on the surface and to control the coating hiding power. The finished coatings can range from translucent to opaque. The finished coatings are also impervious to common automotive industry solvents, such as halogenated hydrocarbons, they are more economical than the current metal coating compositions, and finally, they are environmentally safer because they have lower VOC levels than existing solvent based coatings.

The present invention relates to an aqueous metal coating composition comprising:
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

Further, the present invention relates to a method for preventing corrosion and providing pigmentation to a metal surface comprising coating said metal surface with a composition comprising:
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

The term "oxidized polyethylene (OPE) wax" refers to a wax typically produced by reacting ethylene polymer in oxygen or air at elevated temperatures. Said oxidized polyethylene wax is readily emulsifiable. OPE waxes include, but are not limited to, LUWAX® OA, OA2, OA3, and OA5. LUWAX® is a tradename of BASF AG, Ludwigshafen, Germany.

The term "oxidized polyethylene wax emulsions" refers to emulsions of the aforesaid OPE waxes in water. Possible emulsifiers for said wax emulsions can be anionic, cationic, nonionic, or amphoteric surfactants.

The term "alkaline dispersion of an ethylene acrylic acid copolymer" refers to dispersions prepared from ethylene acrylic acid copolymer with alkali, water, but no surfactant or other emulsifying agent. Such waxes are available from BASF Corporation under the LUWAX® trademark, in particular, as LUWAX® EAS 2 wax. Such waxes will spontaneously disperse or emulsify in water when heated above the melting point and neutralized. On cooling said dispersion to below the congealing point of the wax, the wax particles remain discrete. Said alkaline dispersions of ethylene acrylic copolymers can be produced according to the methods described in US 4,693,909, incorporated by reference herein.

All component percentages are on a weight % solids basis

An aqueous metal coating composition comprising :
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

The present invention further relates to a method for preventing corrosion and providing pigmentation to a metal surface comprising coating said metal surface with a composition comprising:
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

Emulsions of OPE waxes include, but are not limited to, emulsions of LUWAX® OA, OA2, OA3, and OA5 waxes. Preferred OPE waxes include LUWAX® OA 3 and OA 5 waxes. Said emulsions are prepared using anionic, cationic, nonionic, or amphoteric surfactants. The preferred surfactants for preparing the emulsions are anionic and nonionic surfactants. Nonionic surfactants such as ICONOL®, DA6, DA9, TDA8, TDA9, and TDA10 are especially preferred. The ICONOL® line is available from the BASF Corporation, Mt. Olive, N.J. Said OPE wax emulsions are then used at a preferred level of 1-30%, more preferably 1-25%, and most preferably 1-20%.

Aqueous alkaline dispersions of ethylene acrylic acid copolymers include, but are not limited to aqueous alkaline dispersions of LUWAX® EAS 2 wax prepared using alkalis such as metal oxides and hydroxides, ammonium hydroxide, and amines. The preferred alkalis are ammonium hydroxide and amines. Said aqueous alkaline dispersions are preferably used at levels of 3-30%, more preferably 3-25% and most preferably 5-20%.

Pigment dispersions include, but are not limited to, dispersions of carbon black (LUCONYL® Black), azo pigment (LUCONYL® Yellow), copper phthalocyanine beta (LUCONYL® Blue), iron oxide (LUCONYL® Red) and copper phthalocyanine chlorinated (LUCONYL® Green), and titanium dioxide (LUCONYL® White). All pigments useful in the practice of the present invention are available from BASF AG, Ludwigshafen, Germany under the LUCONYL® tradename. LUCONYL® is a tradename of BASF AG, Ludwigshafen, Germany. See, Technical Information Bulletin TI/S 1047e. The preferred level of pigment is 1-20%, more preferred 5-20%, and most preferred 5-15%. Carbon black is the preferred pigment for many applications.

### Examples of the Coatings of the Present Invention

The non-limiting Examples, as described in Table 1 at pages 13-14, serve to illustrate the coating compositions of the present invention and their utility.

The basic formula for a coating of the present invention comprises a mixture of an aqueous alkaline dispersion of LUWAX® EAS 2 copolymer, an aqueous emulsion of LUWAX® OA 3 wax and LUCONYL® black 0066 pigment dispersion. The coating composition is prepared according to methods known to those skilled in the art. Typically, this type of coating is prepared by mixing the components, A., B., and C., with sufficient agitation to completely disperse the pigment at room temperature.

The basic coating formulation is:
A. 6.67% LUWAX® EAS 2 / Diethylethanolamine (DEE) dispersion solids,
B. 3.33% LUWAX® OA 3 emulsion solids,
C. 7% LUCONYL® black 0066 pigment solids, and Water to 100%.

The basic formula for component A., the aqueous alkaline dispersions of LUWAX® EAS 2 copolymer, is:
6.67% LUWAX® EAS 2 ethylene acrylic acid copolymer,
0.96% Diethylethanolamine, and
Water to 100%.

This type of dispersion is prepared according to methods known to one skilled in the art. Typically, the components are heated, with stirring, above the melting point of the copolymer and then cooled rapidly to room temperature.

The basic formula for component B., the aqueous emulsion of LUWAX® OA 3 oxidized polyethylene wax, is:
2.56% LUWAX® OA 3 wax,
0.67% ICONOL® DA 6 alcohol ethoxylate,
0.06% Potassium hydroxide,
0.04% Diethylethanolamine,
0.02% Sodium metabisulfite, and
Water to 100%.

ICONOL® DA 6 is nonionic surfactant prepared by reacting decyl alcohol with an average of 6 moles of ethylene oxide. ICONOL® is a tradename of BASF Corporation, Mt. Olive, New Jersey.

This type of emulsion is prepared according to methods known to one skilled in the art. Typically, the components are heated, with stirring, above the melting point of the wax and then cooled rapidly to room temperature.

The coating can be applied to metal parts by methods including, but not limited to, dipping, brushing, or spraying using the basic coating formula as described hereinabove. The excess coating can be removed by centrifugation or by allowing them to drip dry. Then the parts can be dried and cured at room temperature or at elevated temperatures.

**TABLE 1**

| Examples of Pigmented Coatings | | | | | | | | | | | | | | | |
|---|---|---|---|---|---|---|---|---|---|---|---|---|---|---|---|
| Component | Example | | | | | | | | | | | | | | |
| | 1 | 2 | 3 | 4 | 5 | 6 | 7 | 8 | 9 | 10 | 11 | 12 | 13 | 14 | 15 |
| EAS 2 Solids | 25 | 20 | 10 | 10 | 5 | 20 | 10 | 7.5 | 6.7 | 6.7 | 3 | 10 | 10 | 10 | 10 |
| OA 3 Solids | - | - | - | - | - | 5 | 10 | 2.5 | 3.3 | 3.3 | 2 | 5 | 10 | 5 | 10 |
| 0066 Solids | 20 | 20 | 10 | 5 | 5 | 5 | 5 | 5 | 7 | 5 | 2 | - | - | - | - |
| 3396 Solids | - | - | - | - | - | - | - | - | - | - | - | 5 | 10 | - | - |
| 6900 Solids | - | - | - | - | - | - | - | - | - | - | - | - | - | 5 | 10 |
| Coverage | + | + | +/- | - | - | + | + | + | + | + | +/- | + | + | + | + |
| Draw/Pull | + | + | +/- | - | - | + | + | + | + | + | +/- | + | + | + | + |
| Fill | - | - | + | + | + | +/- | + | + | + | + | + | + | + | + | + |
| Adhesion | - | - | + | + | + | + | + | + | + | + | + | + | + | + | + |
| EAS 2 Solids are the solids from an aqueous diethylethanolamine dispersion of LUWAX® EAS 2 ethylene acrylic acid copolymer resin. OA 3 Solids are the solids from an aqueous emulsion of LUWAX® OA 3 oxidized polyethylene wax. 0066 Solids are the solids from LUCONYL® 0066 black pigment dispersion. 3396 Solids are the solids from LUCONYL® 3396 red pigment dispersion. 6900 Solids are the solids from LUCONYL® 6900 blue pigment dispersion. Evaluation of these properties is based on visual inspection of the parts after coating. +/- performance for that property is borderline between acceptable and unacceptable. Coverage: + = acceptable coverage of the part with good hiding power. - = unacceptable coverage of the part with poor hiding power. Draw/Pull: + = the wet coating does not pull away from the edges of the part nor draw up into droplets on the part surface. - = the wet coating pulls away from the edges of the part or draws up into droplets on the part surface. Fill: + = the coating does not fill fine detail on the part such as grooves or slots in screws. - = the coating fills fine detail on the part such as grooves or slots in screws. | | | | | | | | | | | | | | | |

Table 1 illustrates the utility of the present invention. Examples 1-5 are compositions illustrative of adding pigment to the coatings known in the art. Applicants' Examples 6-15 illustrate the utility of the present invention wherein an emulsion of an OPE wax is added to a blend of an alkaline dispersion of ethylene acrylic acid copolymer and pigment.

## Claims

1. An aqueous metal coating composition comprising:
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

2. A method for preventing corrosion and providing pigmentation to a metal surface comprising coating said metal surface with a composition comprising:
(a) 1 to 30% of an emulsion of oxidized polyethylene wax solids,
(b) 3 to 30% of an aqueous alkaline dispersion of ethylene acrylic acid copolymer solids, and
(c) 1 to 20% of pigment solids.

3. An aqueous metal coating composition according to Claim 1, wherein:
(a) is 1-25%.

4. An aqueous metal coating composition according to Claim 1, wherein:
(b) is 3-25%.

5. An aqueous metal coating composition according to Claim 1, wherein:
(c) is 5-20%.

6. An aqueous metal coating composition according to Claim 1, wherein:
(a) is 1-20%.

7. An aqueous metal coating composition according to Claim 1, wherein:
(b) is 5-20%.

8. An aqueous metal coating composition according to Claim 1, wherein:
(c) is 5-15%.

9. A method according to Claim 2, wherein:
(a) is 1-25%.

10. A method according to Claim 2, wherein:
(b) is 3-25%.

11. A method according to Claim 2, wherein
(c) is 5-20%.

12. A method according to Claim 2, wherein:
(a) is 1-20%.

13. A method according to Claim 2, wherein:
(b) is 5-20%.

14. A method according to Claim 2, wherein:
(c) is 5-15%.
